# EUROPEAN PATENT APPLICATION

(11) **EP 4 848 389 A1**
(43) Date of publication of application: **02.12.2026**
(21) Application number: 25822501.0
(22) Date of filing: 16.05.2025
(51) Int. Cl.: H01M 10/04

(54) **ELECTRODE ASSEMBLY STRUCTURE PREVENTING SHORT CIRCUIT AND METHOD FOR PRODUCING SAME**

(30) Priority: 12.06.2024 KR 20240076524; 18.10.2024 KR 20240143159
(71) Applicant: LG ENERGY SOLUTION, LTD., Seoul 07335 (KR)
(72) Inventor: KWON, Yongjun, Daejeon 34122 (KR); KIM, Jong Seok, Daejeon 34122 (KR); HONG, Sunggeun, Daejeon 34122 (KR); KIM, Nam Young, Daejeon 34122 (KR); KIM, Seongcheol, Daejeon 34122 (KR)
(74) Representative: Plasseraud IP
(86) International application number: PCT/KR2025/006722
(87) International publication number: WO 2025/258871

(57) **Abstract**

The present invention provides a structure of an electrode assembly manufactured using a zigzag stacking method and a manufacturing method thereof, wherein a separator covers a side surface of an electrode laminate, thereby preventing the risk of a short circuit due to the exposure of an end portion of the electrode in the widthwise direction,

## Description

### [TECHNICAL FIELD]

This application claims the benefit of priority based on Korean Patent Application No. 10-2024-0076524 filed on June 12, 2024 and Korean Patent Application No. 10-2024-0143159 filed on October 18, 2024, entire contents disclosed in the documents of the patent applications are included as a part of this specification.

The present invention relates to a structure of an electrode assembly capable of preventing short circuit and a manufacturing method thereof. More specifically, the present invention relates to a structure of an electrode assembly capable of preventing short circuit and a manufacturing method thereof manufactured by a zigzag stacking method and constituting a pouch-type battery cell.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module or battery pack in which multiple battery cells are electrically connected is used.

Meanwhile, as a type of unit secondary battery cell, cylindrical, prismatic and pouch-type battery cells are known. Since it is desirable to manufacture medium-to-large-sized battery modules as small and light as possible, prismatic batteries and pouch-type batteries that may be stacked with a high degree of integration and have a small weight per capacity are mainly used as battery cells for medium-to-large-sized battery modules.

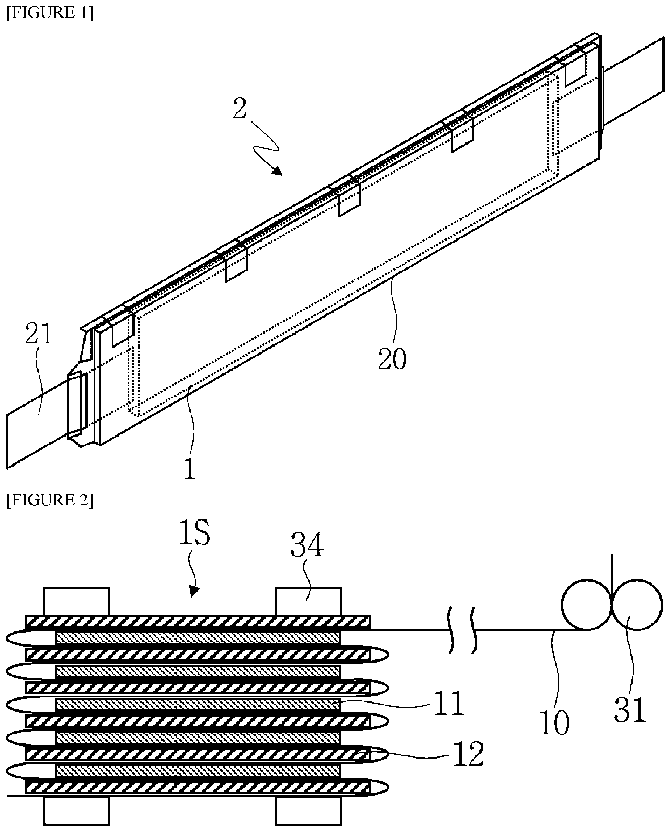

FIG. 1 illustrates a structure of a pouch-type battery cell. Referring to FIG. 1, a pouch-type battery cell 2 is manufactured by accommodating an electrode assembly 1 in a pouch 20 made of a metal foil. Here, the electrode assembly 1 is constituted by alternately stacked anode and cathode with a separator interposed therebetween, and a pair of leads 21 extending from the anode and the cathode, respectively, and protruding out of the pouch 20 for connecting the battery cell 2 to an external device or another battery cell.

The electrode assembly 1 has various structures depending on the manufacturing method thereof. In particular, recently, there are many cases where a high-capacity stack cell type electrode assembly is manufactured at a high speed by using a zigzag stacking method in which an anode and a cathode are alternately stacked between each layer of a zigzag-folded separator.

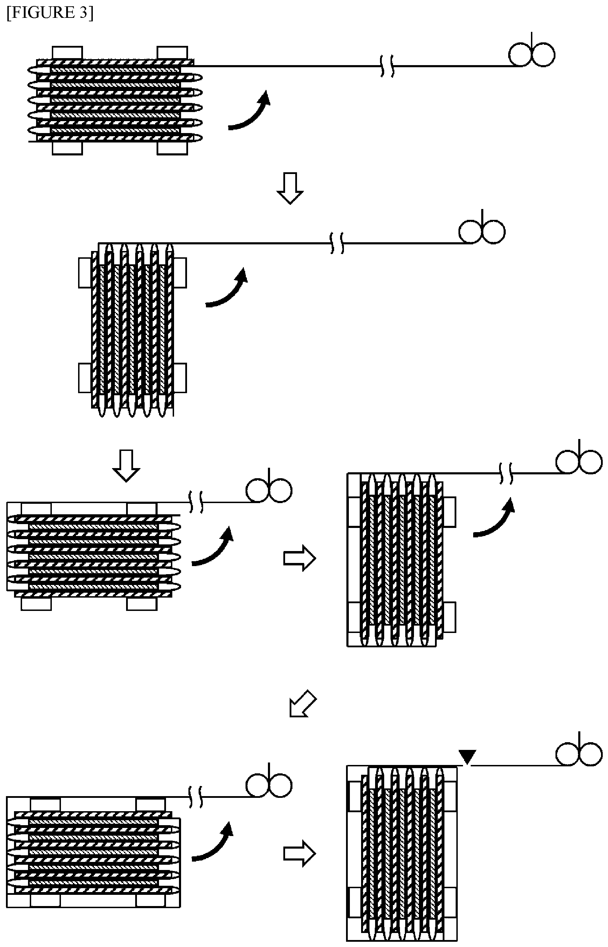

FIG. 2 illustrates an electrode laminate pulled for winding after zigzag stacking is complete, and FIG. 3 illustrates a process of winding a separator on an electrode laminate. Referring to FIGS. 2 and 3, the electrode assembly 1 is manufactured by winding an electrode laminate 1S in which an anode 11 and a cathode 12 are interposed and stacked between each layer of a separator 10 that is continuously supplied through a nip roll 31 and folded in a zigzag shape. The reason for performing such winding process is to prevent the risk of a short circuit that occurs when each end of the anode 11 and the cathode 12 is not surrounded by the separator 10 and is exposed to the left and right sides in the drawing. In particular, since the cathode 12 generally is wider than the anode 11, the gap between the end portion of the cathode 12 and the end portion of the separator 10 is very small, and without the winding process, the risk of a short circuit of the cathode 12 is very high. The winding process is also necessary to make the dimensions of the electrode assembly 1 constant and the surface thereof smooth to increase the insertability of the electrode assembly 1 into the pouch 20.

According to the conventional battery manufacturing method, after the uppermost cathode 12 is stacked, the electrode laminate 1S is gripped by a pair of grippers 34 and rotated, and accordingly, the separator 10 is wound to surround the electrode laminate 1S. The reason winding starts when the uppermost layer of the electrode laminate 1S is the cathode 12 rather than the separator 10 is because odd number of the electrodes 11 and 12 are stacked in total. That is, it is only possible to repeat the same stacking process without changing the direction of the end portion of the separator only when the last end portion of the separator 10 faces the right side in the drawing as the first end portion of the separator to be newly laminated faces the left side in the drawing. However, this causes the gripper 34 to grip the uppermost cathode, and thus, there is a problem that the active material layer coated on the uppermost cathode or the metal foil constituting the uppermost cathode may be damaged.

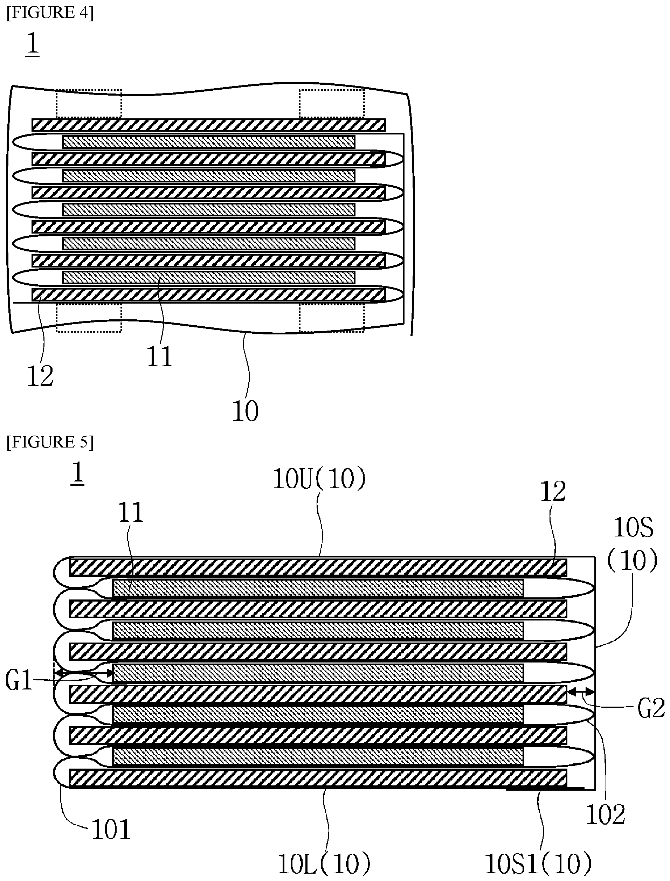

FIG. 4 illustrates an electrode assembly after the separator winding process is complete. Referring to FIG. 4, after the winding process is completed, the gripper 34 ungrips the electrode laminate 1S. Here, a large gap is formed between the electrode laminate 1S and the separator 10 surrounding the same. Accordingly, the separator 10 is not fixed tightly and is sagged. This tendency is particularly stronger as the capacity of the electrode assembly 1 has recently become larger. This is because the electrode assembly 1 has become heavier as the capacity has become larger, and accordingly, the gripper 34 must be thicker vertically in order to have a high section modulus and bending strength.

Meanwhile, the electrode assembly 1 of this structure has a problem that the energy density is degraded due to the space between the separator 10 and the electrode laminate 1S, and the insertability into the pouch 20 is also degraded due to the swell of the separator 10. In addition, since the winding process requires a large amount of separator 10 only for finishing that is unrelated to the battery reaction, there is also a problem that the material cost is high.

### [DISCLOSURE]

### [TECHNICAL PROBLEM]

In order to solve above-described problems of the above-described prior art, it is an object of the present invention to provide a structure of an electrode assembly and a manufacturing method thereof that effectively prevents short circuits of both the anode and cathode.

In addition, it is an object of the present invention to provide a structure of an electrode assembly and a manufacturing method thereof that is manufactured with high capacity and large weight while having high energy density,
It is another object of the present invention to provide a structure of an electrode assembly and a manufacturing method thereof wherein the fixing structure between the separator and the electrode is firm to secure structural stability.

In particular, it is an object of the present invention to provide a battery manufacturing method and a structure of an electrode assembly manufactured using the same that solves the problem that the direction of the end portion of the separator changes left and right after cutting due to an odd number of electrodes in total.

It is also an object of the present invention to provide a battery manufacturing method including supply method and a fixing method of a separator for easily and continuously producing a large number of electrode assemblies of a zigzag stacking structure.

It is also another object of the present invention to provide a structure of an electrode assembly and a manufacturing method thereof wherein a separator may be stably fixed to the surface of an electrode laminate without winding the electrode laminate with the separator during the process of finishing the electrode laminate with a separator.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a structure of an electrode assembly including: an electrode including a first electrode and a second electrode alternately and repeatedly stacked in vertical direction; and a separator stacked together with the first electrode and the second electrode, wherein the second electrode is wider than the first electrode, and an uppermost layer and a lowermost layer of the electrode are constituted by the second electrode.

According to the present invention, the separator includes: a first folded portion folded to surround a first widthwise end of the second electrode; a second folded portion folded to surround a second widthwise end of the first electrode; a stacked portion connecting the first folded portion and the second folded portion and stacked together with the first electrode and the second electrode; a top cover connected to the first folded portion and stacked on the uppermost layer of the electrode; a bottom cover connected to the first folded portion and stacked under the lowermost layer of the electrode; and a side cover extending downward from a second widthwise end of the top cover and fixed to cover a second widthwise end of the second electrode.

The first electrode may be an anode, and the second electrode may be a cathode.

The separator may be a single piece supplied continuously from a single separator roll.

The electrode assembly according to the first embodiment of the present invention is characterized in that the first folded portion is bonded or fused with each other vertically and covers a first widthwise end of the first electrode.

According to an embodiment of the present invention, since the two widthwise ends of the first electrode are covered by the first folded portion and the second folded portion, and the second electrode is covered by the first folded portion and the side cover, the risk of short circuit may be eliminated.

The separator may further include an attachment extending from a lower end of the side cover and attached to another portion of the separator. Here, it is preferable that the side cover be tensioned with an appropriate tension between the second widthwise end of the top cover and the attachment. Accordingly, the side cover may smoothly finish the side surface of the electrode assembly and be in contact with the second folded portion. In such case, the insertability of the electrode assembly into the pouch may be improved and short circuit of the second electrode may be prevented.

For example, the attachment may be bonded or fused to a lower surface of the bottom cover. Here, it is preferable that the attachment extends by equal to or less than half the width of the electrode assembly along widthwise direction. In such case, the attachment may be formed with the electrode assembly gripped vertically and firmly fixed, and applying appropriate tension to the side cover is facilitated. In particular, in such case, the center of gravity of the electrode assembly may be supported by a gripper or a similar jig having high rigidity and thickness such that the electrode assembly may be gripped firmly even when the electrode assembly has a high capacity and large weight.

The side cover may be bonded or fused to the second folded portion. Accordingly, the second widthwise end of the second electrode may be completely covered by the separator, and short circuit due to contact between the second electrodes may be prevented. In addition, in such case, the insertability into the pouch may be improved since the side surface of the electrode assembly is smoothly finished.

According to the first embodiment of the present invention, the side cover may extend downward from the second widthwise end of the top cover and be fused to the second folded portion to cover the second widthwise end of the second electrode, and the side cover may be fixed by the attachment extending from the lower end thereof and fused to the lower surface of the bottom cover.

According to the first modified example of the present invention, the side cover may be in contact with the second folded portion by tensioning the upper end portion connected to the top cover and the lower end portion connected to the attachment although the side cover is not fused to the second folded portion.

It is preferable that the gap between the first widthwise end of the first electrode and a first widthwise end of the first folded portion may be larger than the gap between the second widthwise end of the second electrode and a second widthwise end of the second folded portion.

This is because, in order to maximize energy density and efficiency, it is preferable that the widthwise centers of the first electrode and the second electrode are arranged to be aligned vertically, and the second electrode should be wider than the first electrode. When the gap between the first widthwise end of the first electrode and the first widthwise end of the first folded portion is not sufficiently secured, the length of the first folded portion is not sufficiently secured. As a result, it is difficult for the first folded portions to be bonded or fused to each other vertically. However, when the gap between the first widthwise end of the first electrode and the first widthwise end of the first folded portion and the gap between the second widthwise end of the second electrode and the second widthwise end of the second folded portion are all set to be large, the horizontal dimension of the electrode assembly may become excessive or the energy density and efficiency may decrease.

Specifically, in order to enable vertical attachment between the first folded portions without sacrificing energy density, it is preferable that the gap between the first widthwise end of the first electrode and the first widthwise end of the first folded portion may be at least 1.5 times, more preferably at least two times, the gap between the second widthwise end of the second electrode and the second widthwise end of the second folded portion.

In addition, in order to secure a sufficient widthwise length of the first folded portion, it is preferable that the gap between the first widthwise end of the first electrode and the first widthwise end of the first folded portion may be equal to or larger than 2 mm.

The bonding or fusing between the two separators described above may be by an adhesive or fusible binder coated thereon. Alternatively, the bonding or fusing may be by an adhesive or fusion agent applied separately and interposed therebetween.

According to the first embodiment of the present invention, the separator may be coated with a fusible binder. The fusible binder may be melted and re-solidified by a separate heating means with the two separators in contact with each other, thereby fixing the two separators to each other.

The electrode assembly according to the second embodiment of the present invention is characterized in that the bottom cover includes: an upper layer connected to the first folded portion; a lower layer stacked under the upper layer; and a third folded portion connecting the second widthwise ends of the upper layer and the lower layer.

According to the present invention, one more second electrode is provided compared to the first electrode, and accordingly, one more first folded portion is also provided than compared to the second folded portion. Here, the first folded portion and the second folded portion affect the thickness difference between the two widthwise ends of the electrode assembly due to the elastic restoring force of the folded separator. As a result, the second widthwise end of the electrode assembly is slightly thicker than the first widthwise end of the electrode assembly. This may adversely affect the weight balance of the electrode assembly, cause distortion in the tabs or leads connected to the first electrode and the second electrode, or result in non-uniform pressure applied to the electrode assembly along the widthwise direction during the thermocompression process described later.

According to an embodiment of the present invention, since the third folded portion is provided at the second widthwise end side of the electrode assembly together with the second folded portion, the number of folded portions provided at the two widthwise ends of the electrode assembly becomes the same, and the thickness of the electrode assembly may be close to symmetric in the widthwise direction.

The side cover may be bonded or fused to at least a portion of the second folded portion. Accordingly, the side cover may be fixed while covering the second widthwise end of the second electrode. As a result, the second widthwise end of the second electrode may be completely covered by the separator, and a short circuit due to contact between the second electrodes may be prevented.

Here, preferably, the side cover may be bonded or fused to the entirety of the second folded portion. In such case, the entirety of the second widthwise end of the second electrode may be covered by the separator, and the insertability into the pouch may be improved by smoothly finishing the side surface of the electrode assembly.

It is preferable that the side cover may be bonded or fused to the third folded portion. Here, the side cover may or may not be bonded or fused to the second folded portion as described above.

According to the second embodiment of the present invention, the side cover may be attached to the side surface of the bottom cover as the third folded portion is provided. This is because the area where the side cover is in contact with the bottom cover at the side surface is larger when the bottom cover includes the third folded portion than when the bottom cover doe not include the third folded portion.

In such case, since the side cover is fixed to the side surface of the electrode assembly, it is advantageous that the bonding or fusing between the side cover and the third folded portion may be performed while the electrode assembly is firmly gripped vertically. In particular, since the entirety of the upper surface and lower surface including the center of gravity of the electrode assembly may be supported by a gripper or a similar jig having high rigidity and thickness, the electrode assembly may be firmly gripped even when the electrode assembly has a high capacity and large weight.

In addition, it is preferable that the side cover is tensioned with an appropriate tension between the second widthwise end of the top cover and the bonding or fusing point of the third folded portion. Accordingly, the side cover may smoothly finish the side surface of the electrode assembly and be in contact with the second folded portion. In such case, the insertability of the electrode assembly into the pouch is improved and the short circuit of the second electrode may be prevented.

The separator may further include an attachment extending from a lower end of the side cover and attached to another portion of the separator. Here, it is preferable that the side cover be tensioned with an appropriate tension between the second widthwise end of the top cover and the attachment. Accordingly, the side cover may smoothly finish the side surface of the electrode assembly and be in contact with the second folded portion. In such case, the insertability of the electrode assembly into the pouch may be improved and short circuit of the second electrode may be prevented.

For example, the attachment may be bonded or fused to a lower surface of the bottom cover. Here, it is preferable that the attachment extends by equal to or less than half the width of the electrode assembly along widthwise direction. In such case, the attachment may be formed with the electrode assembly gripped vertically and firmly fixed, and applying appropriate tension to the side cover is facilitated. In particular, in such case, the center of gravity of the electrode assembly may be supported by a gripper or a similar jig having high rigidity and thickness such that the electrode assembly may be gripped firmly even when the electrode assembly has a high capacity and large weight.

It is preferable that the gap between the first widthwise end of the first electrode and a first widthwise end of the first folded portion may be larger than the gap between the second widthwise end of the second electrode and a second widthwise end of the second folded portion.

This is because, in order to maximize energy density and efficiency, it is preferable that the widthwise centers of the first electrode and the second electrode are arranged to be aligned vertically, and the second electrode should be wider than the first electrode. When the gap between the first widthwise end of the first electrode and the first widthwise end of the first folded portion is not sufficiently secured, there is a high risk that the first widthwise end of the first electrode will be exposed and come into contact with each other, resulting in a short circuit. However, when the gap between the first widthwise end of the first electrode and the first widthwise end of the first folded portion and the gap between the second widthwise end of the second electrode and the second widthwise end of the second folded portion are all set to be large, the horizontal dimension of the electrode assembly may become excessive or the energy density and efficiency may decrease.

Specifically, in order to minimize the risk of short circuit of the first electrode without sacrificing energy density, it is preferable that the gap between the first widthwise end of the first electrode and the first widthwise end of the first folded portion may be at least 1.5 times, more preferably at least two times, the gap between the second widthwise end of the second electrode and the second widthwise end of the second folded portion.

In addition, in order to reliably prevent short circuiting of the first electrode, it is preferable that the gap between the first widthwise end of the first electrode and the first widthwise end of the first folded portion may be equal to or larger than 2 mm.

According to the second embodiment of the present invention, the side cover may extend downward from the second widthwise end of the top cover and be fused to the second folded portion and the third folded portion to cover the second widthwise end of the second electrode. Here, the gap between the first widthwise end of the first electrode and the first widthwise end of the first folded portion is set to be 1.5 times as large as the gap between the second widthwise end of the second electrode and the second widthwise end of the second folded portion such that the possibility of a short circuit of the first electrode, which is not completely covered, may be significantly reduced.

According to the second modified example, the side cover may extend downward from the second widthwise end of the top cover and be fused to the second folded portion and the third folded portion to cover the second widthwise end of the second electrode. Here, the first widthwise end of the first electrode may be covered by vertically bonding or fusing the first folded portions with each other.

The bonding or fusing between the two separators described above may be by an adhesive or fusible binder coated thereon. Alternatively, the bonding or fusing may be by an adhesive or fusion agent applied separately and interposed therebetween.

According to the second embodiment of the present invention, the separator may be coated with a fusible binder. The fusible binder may be melted and re-solidified by a separate heating means with the two separators in contact with each other, thereby fixing the two separators to each other.

The present invention also provides a battery manufacturing method of manufacturing an electrode assembly.

The battery manufacturing method according to an embodiment of the present invention included, in order: a stacking step of stacking an electrode between a separator having two alternately folded widthwise ends on a stack table to form an electrode laminate; a pulling step of further unfolding the separator away from a second widthwise end to form a developed portion with the electrode laminate gripped after the separator is stacked on an uppermost layer of the electrode; a cutting step of cutting the developed portion at a predetermined cutting portion; a side covering step of forming a side cover where the developed portion covers a side surface of the electrode laminate by gripping and then relatively moving the cutting portion with respect to the electrode laminate; a temporarily attaching step of attaching and fixing the developed portion to another portion of the separator; and a thermal compression bonding step of thermally compressing to vertically bond the electrode laminate.

According to an embodiment of the present invention, the side surface of the electrode assembly may be simply finished without completely winding the separator, minimizing the possibility of a short circuit. In particular, according to the present embodiment, even when the electrode assembly has large weight, the separator does not have swells or excessive empty space such that the electrode assembly may be manufactured with improved insertability into the pouch, dimensional uniformity, energy density, and separator fixing strength.

The stacking step may include, in order: a step of fixing an end portion of the separator continuously supplied from a separator roll to the stack table so as to face a first widthwise end; a step of folding the separator at a second widthwise end to form a third folded portion; and a step of alternately stacking a first electrode and a second electrode while repeatedly folding the separator to alternately form a first folded portion and a second folded portion.

According to an embodiment of the present invention, since the top cover extends from the first folded portion, the electrode laminate is pulled toward the first widthwise end in the pulling step. Accordingly, in the cutting step, the cutting portion is formed toward the second widthwise end. In such case, when the end portion of the separator is fixed onto the stack table to start a new stacking step, the separator is fixed with the end thereof facing the first widthwise end. When the third folded portion is not formed in the stacking step, the forming direction of the first folded portion and the second folded portion becomes opposite to that of the previous electrode laminate in the new stacking step, which causes great inconvenience in the process. That is, by folding the separator once in advance to form the third folded portion before starting stacking of the electrode, the forming direction of the first folded portion and the second folded portion may be maintained constant in each of the repeated stacking steps.

From the pulling step to the temporarily attaching step, the electrode laminate may be gripped vertically by a pair of grippers. Accordingly, the upper surface and lower surface of the electrode laminate may be in contact with the pair of grippers.

The temporarily attaching step may include a step of bonding or fusing the cutting portion to a lower surface of a bottom cover to form an attachment. Accordingly, a short-circuit prevention structure of the second electrode may be formed by bringing the side cover may into contact with the side surface of the electrode laminate, and the separator may be firmly fixed. Here, it is preferable that the side cover be subjected to appropriate tension such that the side cover is brought into contact with to the second folded portion while smoothly finishing the side surface of the electrode assembly.

Specifically, in the temporarily attaching step, the attachment may be formed between a second widthwise end and a widthwise center of the lower surface of the bottom cover in the temporarily attaching step. Accordingly, the attachment may be formed on the lower surface of the bottom cover even when the gripper is gripping the electrode laminate.

According to an embodiment of the present invention, the attachment may be fused to a portion of the lower surface of the bottom cover. Specifically, the attachment may be formed by a tack welding device gripping the cutting portion, pulling the developed portion to surround the side surface of the electrode laminate, and then fusing to attach the cutting portion to the lower surface of the bottom cover.

The temporarily attaching step may include a step of bonding or fusing the side cover to the entirety of or a portion of the second folded portion and/or the third folded portion. Accordingly, the side cover may completely cover the second widthwise end of the second electrode to prevent short circuit, and smoothly finish the side surface of the electrode assembly to improve the insertability into the pouch.

According to an embodiment of the present invention, the side cover may be fused with the second folded portion and/or the third folded portion by a side sealing device that heats and presses the side cover from the side surface. Here, the side cover may be thermally contracted and pulled tightly as heated, and the side surface of the electrode assembly may be finished more smoothly.

In the thermal compression bonding step, the adjacent surfaces of the separators may be bonded or fused. Here, the surface of the separator may be coated with an adhesive or fusible binder. In addition, the first electrode and the second electrode may also be coated with an adhesive or fusible binder, and the surface of the separator and the surface of the electrode may be bonded or fused with each other. Accordingly, the separator and the electrode may be firmly fixed, thereby reinforcing the structural stability of the electrode assembly and preventing a short circuit.

According to an embodiment of the present invention, in the thermal compression bonding step, the first folded portions may be vertically bonded or fused to each other. Accordingly, the first widthwise end of the first electrode is covered by the separator such that a short circuit may be prevented.

Here, it is preferable that the adhesion between the second electrode and the separator is formed weaker than the adhesion between the separators. When the adhesion between the separator and the second electrode is stronger than the adhesion between the separators, the adhesion between the first folded portions may be released during the process of the electrode assembly being elastically restored after thermal compression.

### [ADVANTAGEOUS EFFECTS]

The present invention may provide a structure of an electrode assembly that effectively prevents short circuits of both the anode and cathode.

The present invention can provide a structure of an electrode assembly and a manufacturing method thereof that is manufactured with high capacity and large weight while having high energy density and strong fixing force of a separator.

The present invention may also provide a structure of an electrode assembly with improved left-right and up-down symmetry in terms of dimensions and capable of uniformly receiving thermal compression.

The present invention can also provide a battery manufacturing method including supply method and a fixing method of a separator for easily and continuously producing a large number of electrode assemblies of a zigzag stacking structure.

In particular, the present invention provides a structure of an electrode assembly and a manufacturing method thereof wherein the bottom cover of a separator is formed as a double layer having a third folded portion such that the folding of the separator occurs an even number of times thereby maintaining the direction of the end portion of the separator constant after cutting.

In addition, the present invention provides a structure of an electrode assembly wherein a cover portion of the separator completely covers only one side of the electrode laminate while efficiently preventing short circuits between electrodes.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a structure of a pouch-type battery cell.
FIG. 2 illustrates an electrode laminate pulled for winding after zigzag stacking is complete.
FIG. 3 illustrates a process of winding a separator on an electrode laminate.
FIG. 4 illustrates an electrode assembly after the separator winding process is complete.
FIG. 5 illustrates an electrode assembly according to a first embodiment.
FIG. 6 illustrates the electrode assembly of FIG. 5 accommodated in a pouch to form a battery cell.
FIG. 7 illustrates the electrode assembly according to a first modified example.
FIG. 8 illustrates the electrode assembly according to a second embodiment.
FIG. 9 illustrates an enlarged view of the main portion of the electrode assembly of FIG. 8.
FIG. 10 illustrates an electrode assembly according to a second modified example.
FIG. 11 illustrates a battery manufacturing method according to an embodiment.
FIG. 12 illustrates the state immediately before a new stacking step starts and immediately after the cutting step.
FIG. 13 illustrates an end portion of the separator fixed to a stack table.
FIG. 14 illustrates the state in which a third folded portion is formed and a second electrode is stacked.
FIGS. 15 to 20 sequentially illustrate folding of a separator and a stacking process of an electrode repeated until an electrode laminate is complete.
FIG. 21 illustrates the electrode laminate formed after the stacking step is completed.
FIG. 22 illustrates the electrode laminate gripped by the gripper and pulled.
FIG. 23 illustrates a developed portion of the separator being cut.
FIGS. 24 and 25 illustrate a process of cutting portion of a separator forming a side cover.
FIGS. 26 and 27 illustrate a process of the side cover being temporarily attached to an electrode laminate.
FIGS. 28 and 29 illustrate a temporarily attaching step according to a modified example.
FIGS. 30 and 31 illustrate a process of an electrode laminate being subjected to a thermo compression bonding.

### [DESCRIPTION OF REFERENCE NUMERALS]

1: electrode assembly
1S: electrode laminate
10: separator
10a: first side
10b: second side
101: first folded portion
102: second folded portion
103: third folded portion
104: stacked portion
10U: top cover
10L: bottom cover
10L1: upper layer
10L2: lower layer
100: developed portion
10C: cutting portion
10S: side cover
10S1: attachment
11: first electrode (anode)
12: second electrode (cathode)
2: battery cell
20: pouch
21: lead
30: stack table
300: center axis
31: nip roll
32: transport device
33: mandrel
34: gripper
35: tack welding device
36: side sealing device
37: thermal compression bonding device

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

### [GENERAL STRUCTURE OF BATTERY CELL]

FIG. 1 illustrates a structure of a pouch-type battery cell. Referring to FIG. 1, an electrode assembly 1 according to embodiments of the present invention may be accommodated in a pouch 20 to form a battery cell 2.

The electrode assembly 1 may include an electrode laminate in which a first electrode and a second electrode are stacked with a separator interposed therebetween. The first electrode may be an anode, and the second electrode may be a cathode.

The pouch 20 may be formed by folding a sheet of metal material in half and sealing the edges except for the folded edge. Specifically, the pouch 20 may be formed by folding the sheet in half with respect to a predetermined center line, and may be formed by forming a recess formed by plastically deforming the sheet on one or both sides with respect to the center line. The one or more recesses may form an accommodating space for accommodating the electrode assembly after the sheet is folded in half and sealed.

A pair of leads 21 extending from the first electrode and the second electrode may protrude out of the pouch 20. A plurality of tabs extending from the first electrode and the second electrode may be connected to the leads 21.

For convenience of description and understanding, a case where the electrode assembly according to the present invention constitutes a pouch-type battery cell is exemplified herein. However, the structure and manufacturing method of the electrode assembly according to the present invention, which will be described below, may be applied to any structure in which the electrode assembly is accommodated in a predetermined casing, such as a prismatic battery rather than a pouch-type battery cell as described above.

### [STRUCTURE OF ELECTRODE ASSEMBLY]

FIG. 5 illustrates an electrode assembly according to a first embodiment. Referring to FIG. 5, the electrode assembly 1 according to embodiments of the present invention includes a structure in which a plurality of electrodes 11 and 12 are laminated together with a separator 10. Specifically, the electrode assembly 1 includes a structure in which the first electrode 11 and the second electrode 12 are alternately and repeatedly laminated with a separator 10 interposed therebetween.

The second electrode 12 is wider than the first electrode 11. Here, since the efficiency of the battery reaction is generally maximized when there is more the cathode material than the anode material, it is preferable that the first electrode 11 is an anode and the second electrode 12 is a cathode.

One more second electrode 12 is laminated compared to the first electrode 11. Specifically, since the first electrode 11 and the second electrode 12 are alternately stacked, the second electrode 12 constitutes the uppermost layer and the lowermost layer.

The separator 10 may be formed by a single sheet that is folded in a zigzag manner and extends to pass between the first electrode 11 and the second electrode 12. Specifically, the separator 10 is continuously supplied from a single separator roll and may be interposed between each layer of the electrodes 11 and 12 by being folded each time the electrodes 11 and 12 are stacked.

According to the present invention, the separator 10 includes: a first folded portion 101 folded to surround a first widthwise end of the second electrode 12; a second folded portion 102 folded to surround a second widthwise end of the first electrode 11; a stacked portion 104 connecting the first folded portion 101 and the second folded portion 102 and stacked together with the first electrode 11 and the second electrode 12; a top cover 10U connected to the first folded portion 101 and stacked on the uppermost layer of the electrode; a bottom cover 10L connected to the first folded portion 101 and stacked under the lowermost layer of the electrode; and a side cover 10S extending downward from a second widthwise end of the top cover 10U and fixed to cover a second widthwise end of the second electrode 12.

### [FIRST EMBODIMENT]

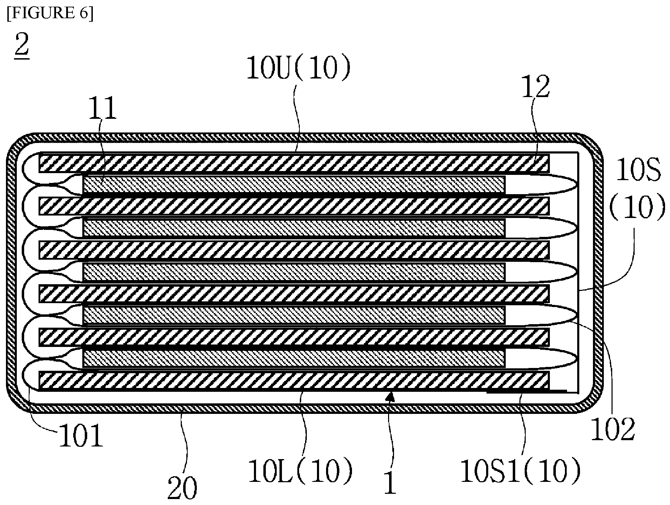

FIG. 6 illustrates the electrode assembly of FIG. 5 accommodated in a pouch to form a battery cell. Referring back to FIG. 5 together with FIG. 6, the electrode assembly 1 according to the first embodiment of the present invention is characterized in that the first folded portion 101 is bonded or fused with each other vertically and covers a first widthwise end of the first electrode 11.

According to an embodiment of the present invention, since the two widthwise ends of the first electrode 11 are covered by the first folded portion 101 and the second folded portion 102, and the second electrode 12 is covered by the first folded portion 101 and the side cover 10S, the risk of short circuit may be eliminated.

The separator 10 may further include an attachment 10S1 extending from a lower end of the side cover 10S and attached to another portion of the separator 10. Here, it is preferable that the side cover 10S be tensioned with an appropriate tension between the second widthwise end of the top cover 10U and the attachment 10S1. Accordingly, the side cover 10S may smoothly finish the side surface of the electrode assembly 1 and be in contact with the second folded portion 102. In such case, the insertability of the electrode assembly 1 into the pouch 20 may be improved and short circuit of the second electrode 12 may be prevented. In addition, the electrode assembly 1 becomes compact such that the energy density of the battery cell 2 increases significantly.

For example, the attachment 10S1 may be bonded or fused to a lower surface of the bottom cover 10L. Here, it is preferable that the attachment 10S1 extends by equal to or less than half the width of the electrode assembly 1 along widthwise direction. In such case, the attachment 10S1 may be formed with the electrode assembly 1 gripped vertically and firmly fixed, and applying appropriate tension to the side cover 10S is facilitated. In particular, in such case, the center of gravity of the electrode assembly 1 may be supported by a gripper or a similar jig having high rigidity and thickness such that the electrode assembly 1 may be gripped firmly even when the electrode assembly 1 has a high capacity and high weight.

The side cover 10S may be bonded or fused to the second folded portion 102. Accordingly, the second widthwise end of the second electrode 12 may be completely covered by the separator 10, and short circuit due to contact between the second electrodes 12 may be prevented. In addition, in such case, the insertion of the electrode assembly 1 into the pouch 20 may be facilitated since the side surface of the electrode assembly 1 is smoothly finished.

According to the first embodiment of the present invention, the side cover 10S may extend downward from the second widthwise end of the top cover 10U and be fused to the second folded portion 102 to cover the second widthwise end of the second electrode 12, and the side cover 10S may be fixed by the attachment 10S1 extending from the lower end thereof and fused to the lower surface of the bottom cover 10L.

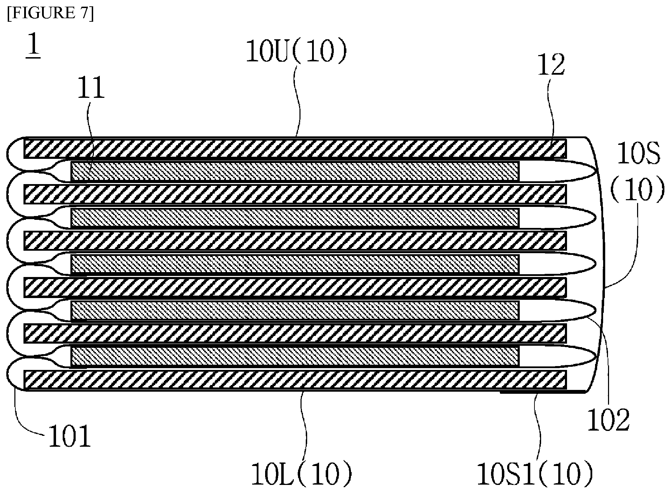

FIG. 7 illustrates the electrode assembly according to a first modified example. Referring to FIG. 7, the side cover 10S according to the first modified example may be in contact with the second folded portion 102 by tensioning the upper end portion connected to the top cover 10U and the lower end portion connected to the attachment 10S1 although the side cover 10S is not fused to the second folded portion 102.

Referring back to FIG. 5, it is preferable that the gap G1 between the first widthwise end of the first electrode 11 and a first widthwise end of the first folded portion 101 may be larger than the gap G2 between the second widthwise end of the second electrode 12 and a second widthwise end of the second folded portion 102.

This is because, in order to maximize energy density and efficiency, it is preferable that the widthwise centers of the first electrode 11 and the second electrode 12 are arranged to be aligned vertically, and the second electrode 12 should be wider than the first electrode 11. When the gap G1 between the first widthwise end of the first electrode 11 and the first widthwise end of the first folded portion 101 is not sufficiently secured, the length of the first folded portion 101 is not sufficiently secured. As a result, it is difficult for the first folded portion 101 to be bonded or fused to each other vertically. However, when the gap G1 between the first widthwise end of the first electrode 11 and the first widthwise end of the first folded portion 101 and the gap G2 between the second widthwise end of the second electrode 12 and the second widthwise end of the second folded portion 102 are all set to be large, the horizontal dimension of the electrode assembly 1 may become excessive or the energy density and efficiency may decrease.

Specifically, in order to enable vertical attachment between the first folded portion 101 without sacrificing energy density, it is preferable that the gap G1 between the first widthwise end of the first electrode 11 and the first widthwise end of the first folded portion 101 may be at least 1.5 times, more preferably at least two times, the gap G2 between the second widthwise end of the second electrode 12 and the second widthwise end of the second folded portion 102.

In addition, in order to secure a sufficient widthwise length of the first folded portion 101, it is preferable that the gap G1 between the first widthwise end of the first electrode 11 and the first widthwise end of the first folded portion 101 may be equal to or larger than 2 mm.

The bonding or fusing between the two separators 10 described above may be by an adhesive or fusible binder coated thereon. Alternatively, the bonding or fusing may be by an adhesive or fusion agent applied separately and interposed therebetween.

According to the first embodiment of the present invention, the separator 10 may be coated with a fusible binder. The fusible binder may be melted and re-solidified by a separate heating means with the two separators 10 in contact with each other, thereby fixing the two separators 10 to each other.

### [SECOND EMBODIMENT]

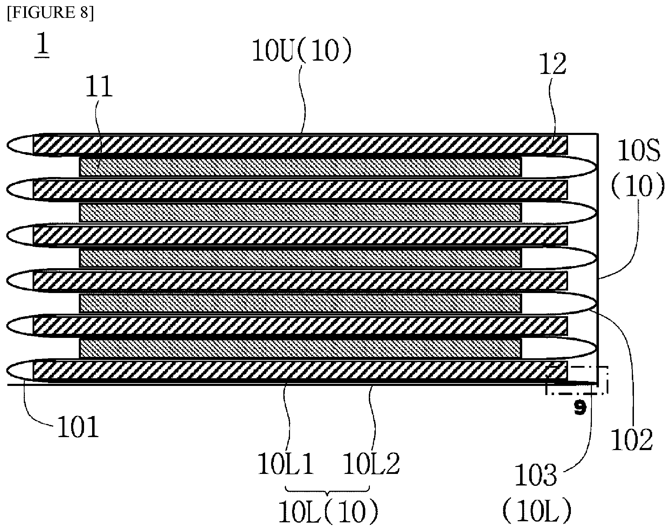

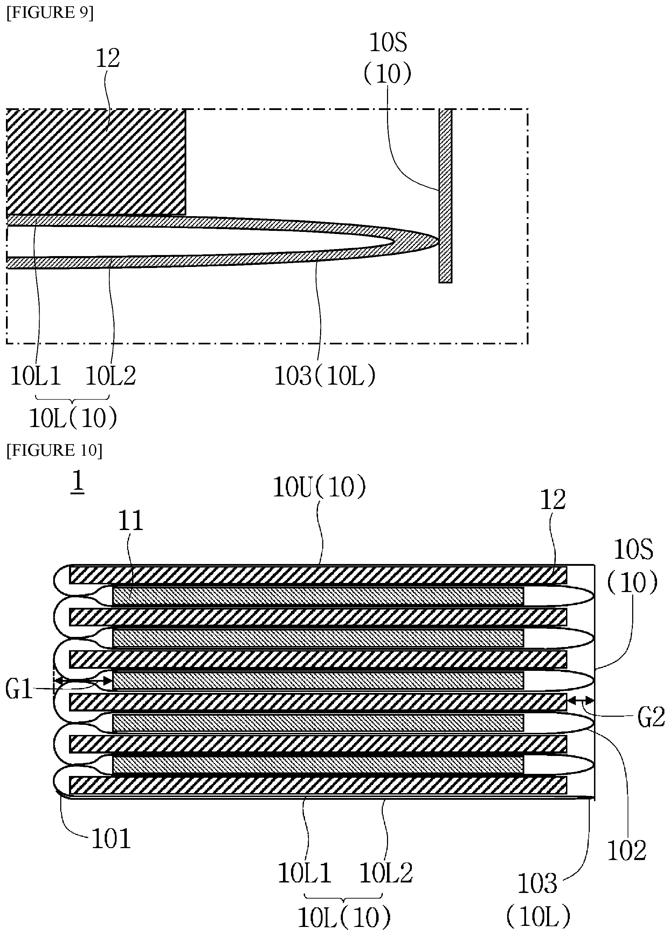

FIG. 8 illustrates the electrode assembly according to a second embodiment, and FIG. 9 illustrates an enlarged view of the main portion of the electrode assembly of FIG. 8. Referring to FIGS. 8 and 9, the electrode assembly 1 according to the second embodiment of the present invention is characterized in that the bottom cover 10L includes: an upper layer 10L1 connected to the first folded portion 101; a lower layer 10L2 stacked under the upper layer 10L1; and a third folded portion 103 connecting the second widthwise ends of the upper layer 10L1 and the lower layer 10L2.

According to the present invention, one more second electrode 12 is provided compared to the first electrode 11, and accordingly, one more first folded portion 101 is also provided than compared to the second folded portion 102. Here, the first folded portion 101 and the second folded portion 102 affect the thickness difference between the two widthwise ends of the electrode assembly 1 due to the elastic restoring force of the folded separator 10. As a result, the second widthwise end of the electrode assembly 1 is slightly thicker than the first widthwise end of the electrode assembly 1. This may adversely affect the weight balance of the electrode assembly 1, cause distortion in the tabs or leads connected to the first electrode 11 and the second electrode 12, or result in non-uniform pressure applied to the electrode assembly 1 along the widthwise direction during the thermocompression process described later.

According to an embodiment of the present invention, since the third folded portion 103 is provided at the second widthwise end of the electrode assembly 1 together with the second folded portion 102, the number of folded portions provided at the two widthwise ends of the electrode assembly 1 becomes the same, and the thickness of the electrode assembly 1 may be close to symmetric in the widthwise direction.

The side cover 10S may be bonded or fused to at least a portion of the second folded portion 102. Accordingly, the side cover 10S may be fixed while covering the second widthwise end of the second electrode 12. As a result, the second widthwise end of the second electrode 12 may be completely covered by the separator 10, and a short circuit due to contact between the second electrodes 12 may be prevented.

Here, preferably, the side cover 10S may be bonded or fused to the entirety of the second folded portion 102. In such case, the entirety of the second widthwise end of the second electrode 12 may be covered by the separator 10, and short circuit due to contact between the second electrodes 12 may be prevented. In addition, in such case, the insertion of the electrode assembly 1 into the pouch 20 may be facilitated since the side surface of the electrode assembly 1 is smoothly finished.

It is preferable that the side cover 10S may be bonded or fused to the third folded portion 103. Here, the side cover 10S may or may not be bonded or fused to the second folded portion 102 as described above.

According to the second embodiment of the present invention, the side cover 10S may be attached to the side surface of the bottom cover 10L as the third folded portion 103 is provided. This is because the area where the side cover 10S is in contact with the bottom cover 10L at the side surface is larger when the bottom cover 10L includes the third folded portion 103 than when the bottom cover 10L does not include the third folded portion 103.

In such case, since the side cover 10S is fixed to the side surface of the electrode assembly 1, it is advantageous that the bonding or fusing between the side cover 10S and the third folded portion 103 may be performed while the electrode assembly 1 is firmly gripped vertically. In particular, since the entirety of the upper surface and lower surface including the center of gravity of the electrode assembly 1 may be supported by a gripper or a similar jig having high rigidity and thickness, the electrode assembly 1 may be firmly gripped even when the electrode assembly 1 has a high capacity and large weight.

In addition, it is preferable that the side cover 10S is tensioned with an appropriate tension between the second widthwise end of the top cover 10U and the bonding or fusing point of the third folded portion 103. Accordingly, the side cover 10S may smoothly finish the side surface of the electrode assembly 1 and be in contact with the second folded portion 102. In such case, the insertability of the electrode assembly 1 into the pouch 20 is improved and the short circuit of the second electrode 12 may be prevented. In addition, the electrode assembly 1 becomes compact such that the energy density of the battery cell 2 increases significantly.

The separator 10 may further include an attachment 10S1 extending from a lower end of the side cover 10S and attached to another portion of the separator 10. Here, it is preferable that the side cover 10S be tensioned with an appropriate tension between the second widthwise end of the top cover 10U and the attachment 10S1. Accordingly, the side cover 10S may smoothly finish the side surface of the electrode assembly 1 and be in contact with the second folded portion 102. In such case, the insertability of the electrode assembly 1 into the pouch may be improved and short circuit of the second electrode 12 may be prevented.

For example, the attachment 10S1 may be bonded or fused to a lower surface of the bottom cover 10L. Here, it is preferable that the attachment 10S1 extends by equal to or less than half the width of the electrode assembly 1 along widthwise direction. In such case, the attachment 10S1 may be formed with the electrode assembly 1 gripped vertically and firmly fixed, and applying appropriate tension to the side cover 10S is facilitated. In particular, in such case, the center of gravity of the electrode assembly 1 may be supported by a gripper or a similar jig having high rigidity and thickness such that the electrode assembly 1 may be gripped firmly even when the electrode assembly 1 has a high capacity and high weight.

It is preferable that the gap G1 between the first widthwise end of the first electrode 11 and a first widthwise end of the first folded portion 101 may be larger than the gap G2 between the second widthwise end of the second electrode 12 and a second widthwise end of the second folded portion 102.

This is because, in order to maximize energy density and efficiency, it is preferable that the widthwise centers of the first electrode 11 and the second electrode 12 are arranged to be aligned vertically, and the second electrode 12 should be wider than the first electrode 11. When the gap G1 between the first widthwise end of the first electrode 11 and the first widthwise end of the first folded portion 101 is not sufficiently secured, there is a high risk that the first widthwise end of the first electrode 11 will be exposed and come into contact with each other, resulting in a short circuit. However, when the gap G1 between the first widthwise end of the first electrode 11 and the first widthwise end of the first folded portion 101 and the gap G2 between the second widthwise end of the second electrode 12 and the second widthwise end of the second folded portion 102 are all set to be large, the horizontal dimension of the electrode assembly 1 may become excessive or the energy density and efficiency may decrease.

Specifically, in order to minimize the risk of short circuit of the first electrode 11 without sacrificing energy density, it is preferable that the gap G1 between the first widthwise end of the first electrode 11 and the first widthwise end of the first folded portion 101 may be at least 1.5 times, more preferably at least two times, the gap G2 between the second widthwise end of the second electrode 12 and the second widthwise end of the second folded portion 102.

In addition, in order to reliably prevent short circuiting of the first electrode 11, it is preferable that the gap G1 between the first widthwise end of the first electrode 11 and the first widthwise end of the first folded portion 101 may be equal to or larger than 2 mm.

According to the second embodiment of the present invention, the side cover 10S may extend downward from the second widthwise end of the top cover 10U and be fused to the second folded portion 102 and the third folded portion 103 to cover the second widthwise end of the second electrode 12. Here, the gap G1 between the first widthwise end of the first electrode 11 and the first widthwise end of the first folded portion 101 is set to be 1.5 times larger than the gap G2 between the second widthwise end of the second electrode 12 and the second widthwise end of the second folded portion 102 such that the possibility of a short circuit of the first electrode 11, which is not completely covered, may be significantly reduced.

FIG. 10 illustrates an electrode assembly according to a second modified example. Referring to FIG. 10, the side cover 10S according to the second modified example may extend downward from the second widthwise end of the top cover 10U and be fused to the second folded portion 102 and the third folded portion 103 to cover the second widthwise end of the second electrode 12. Here, the first widthwise end of the first electrode 11 may be covered by vertically bonding or fusing the first folded portion 101 with each other.

Referring back to FIG. 8, the bonding or fusing between the two separators 10 described above may be by an adhesive or fusible binder coated thereon. Alternatively, the bonding or fusing may be by an adhesive or fusion agent applied separately and interposed therebetween.

According to the second embodiment of the present invention, the separator 10 may be coated with a fusible binder. The fusible binder may be melted and re-solidified by a separate heating means with the two separators 10 in contact with each other, thereby fixing the two separators 10 to each other.

### [BATTERY MANUFACTURING METHOD]

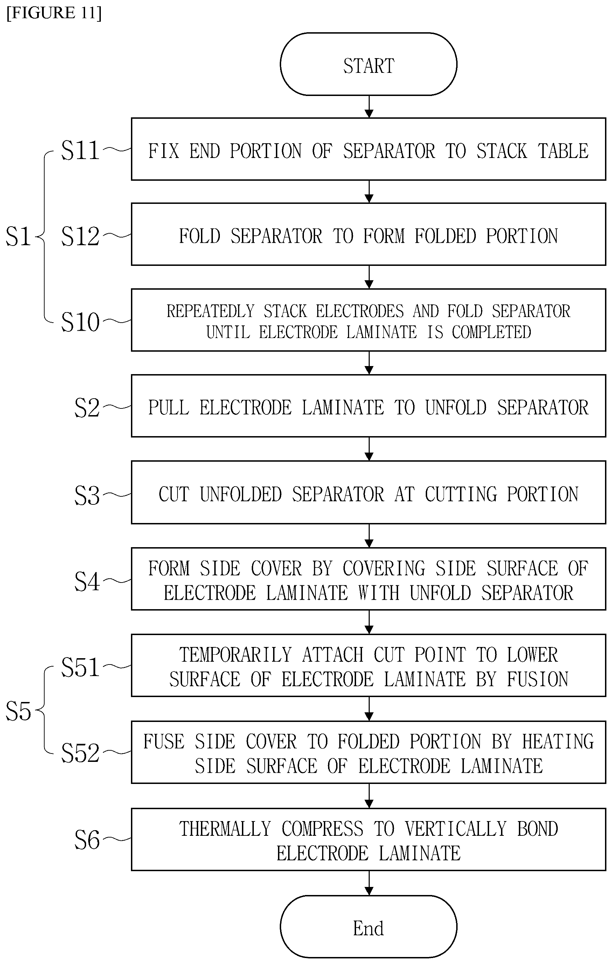

FIG. 11 illustrates a battery manufacturing method according to an embodiment. Referring to FIG. 11, the battery manufacturing method according to an embodiment of the present invention includes: a stacking step S1 of stacking electrodes 11 and 12 between a separator 10 having two alternately folded widthwise ends on a stack table 30 to form an electrode laminate 1S; a pulling step S2 of further unfolding the separator 10 away from a second widthwise end to form a developed portion 100 with the electrode laminate 1S gripped after the separator 10 may be stacked on an uppermost layer of the electrodes 11 and 12; a cutting step S3 of cutting the developed portion 100 at a predetermined cutting portion 10C; a side covering step S4 of forming a side cover 10S where the developed portion 100 covers a side surface of the electrode laminate 1S by gripping and then relatively moving the cutting portion 10C with respect to the electrode laminate 1S; a temporarily attaching step S5 of attaching and fixing the developed portion 100 to another portion of the separator 10; and a thermal compression bonding step S6 of thermally compressing to vertically bond the electrode laminate 1S.

According to an embodiment of the present invention, the side surface of the electrode assembly 1 may be simply finished without completely winding the separator 10, minimizing the possibility of a short circuit. In particular, according to the present embodiment, even when the electrode assembly 1 has large weight, the separator 10 does not have swells or excessive empty space such that the electrode assembly 1 may be manufactured with improved insertability into the pouch, dimensional uniformity, energy density, and separator fixing strength.

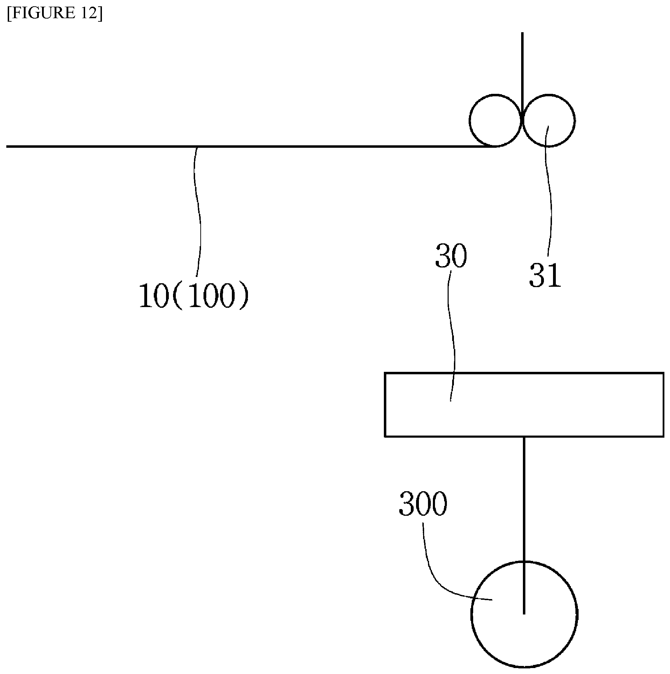

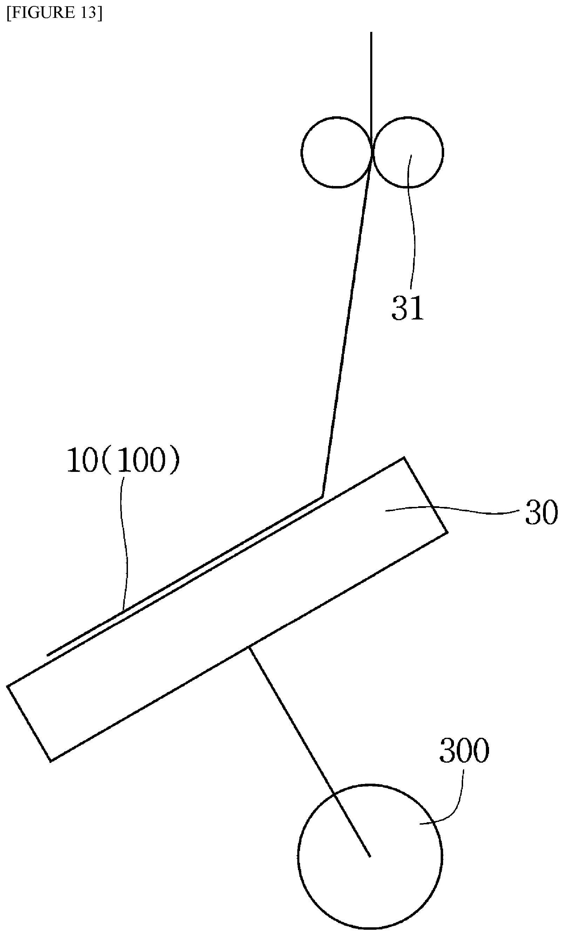

FIG. 12 illustrates the state immediately before a new stacking step starts and immediately after the cutting step, and FIG. 13 illustrates an end portion of the separator fixed to a stack table. Referring to FIGS. 12 and 13, the stacking step S1 may include a step S11 of fixing the end portion of the separator 10 continuously supplied from a separator roll to the stack table 30. The separator 10 is developed from the separator roll and is continuously supplied while the supply position thereof is regulated by a pair of nip rolls 31.

Here, the end portion of the separator 10 may be directed toward the first widthwise end. This is because the separator 10 is developed toward the second widthwise end and cut in the pulling step S2 and cutting step S3 performed immediately before the current stacking step S1. This will be described in more detail later when the pulling step S2 and cutting step S3 are described.

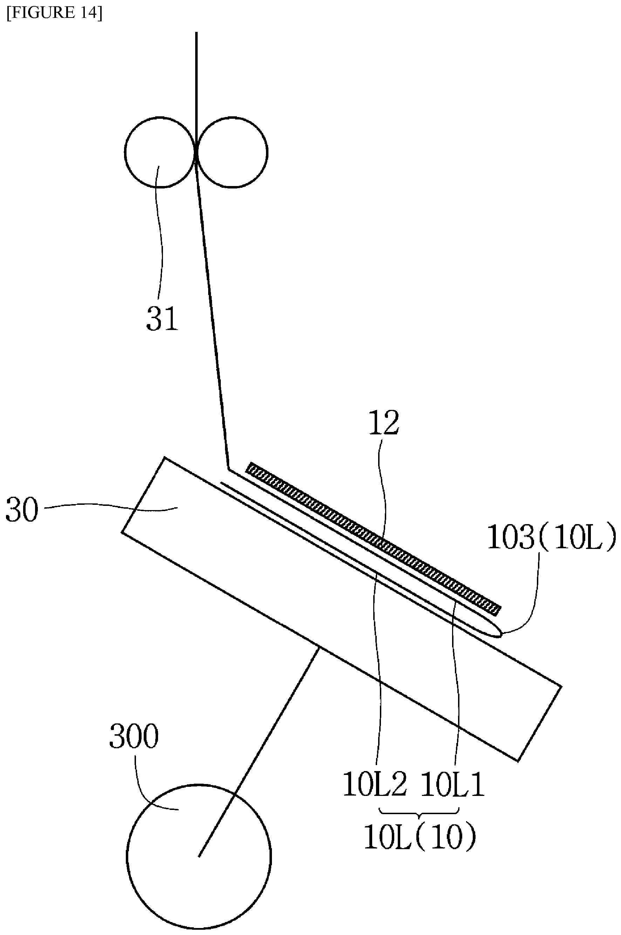

FIG. 14 illustrates the state in which a third folded portion is formed and a second electrode is stacked. Referring to FIG. 14, the stacking step S1 may include a step S12 of folding the separator 10 at the second widthwise end to form a third folded portion 103. Here, the bottom cover 10L may be formed. Specifically, in the separator 10, the portion fixed to the stack table 30 constitutes the lower layer 10L2 of the bottom cover 10L, and the portion connected to the lower layer 10L2 through the third folded portion 103 and laminated directly on the lower layer 10L2 constitutes the upper layer 10L1 of the bottom cover 10L. Here, an electrode is not laminated between the upper layer 10L1 and the lower layer 10L2.

After the bottom cover 10L including the third folded portion 103 is formed, the second electrode 12 may be stacked. Here, when the bottom cover 10L is not formed as a double layer by not forming the third folded portion 103, the separator 10 should be folded at the second widthwise end of the second electrode 12. However, according to the present embodiment, since the third folded portion 103 is formed, the separator 10 surrounding the second electrode 12 may be folded to surround the first widthwise end of the second electrode 12.

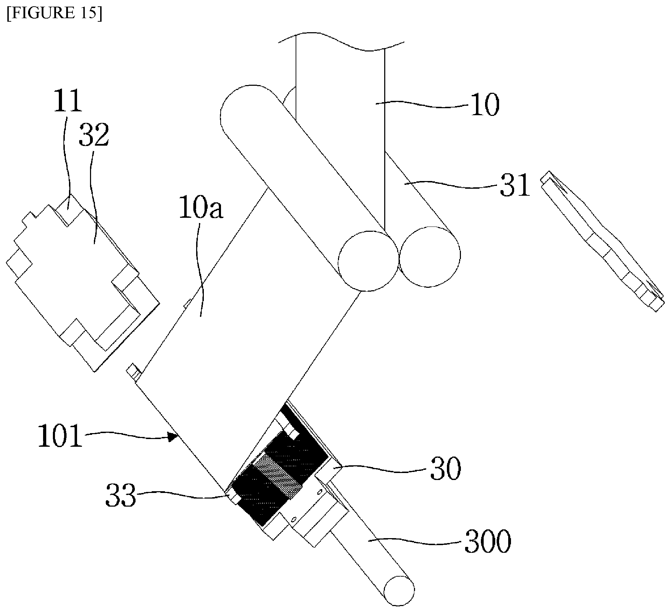

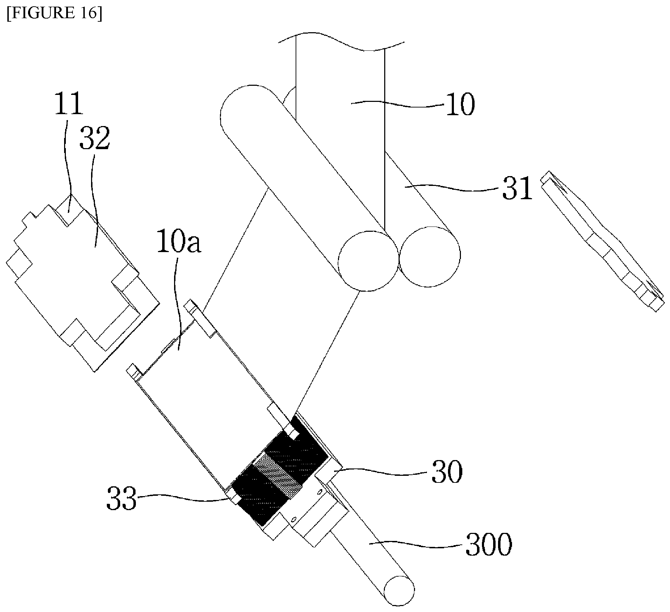

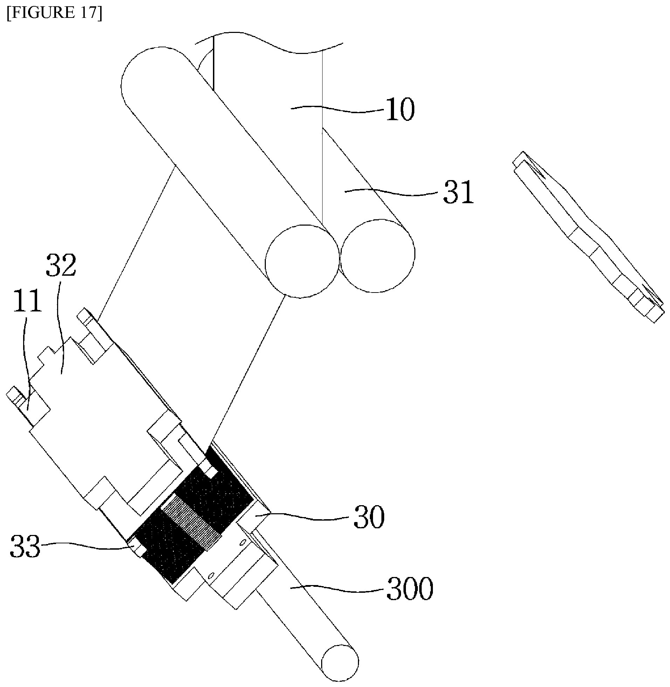

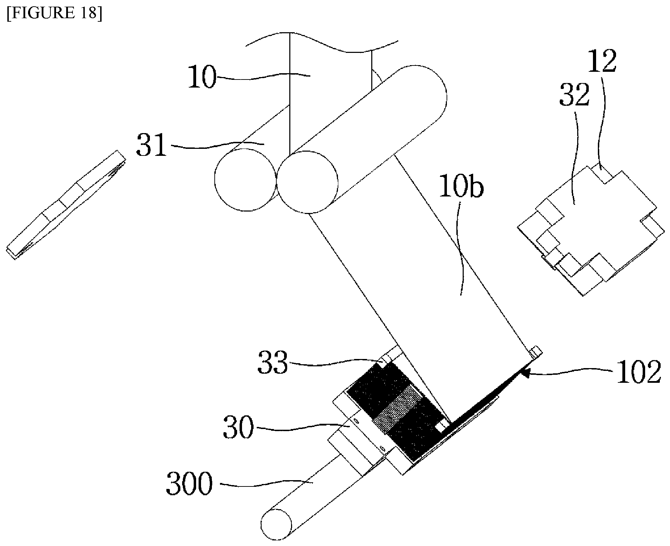

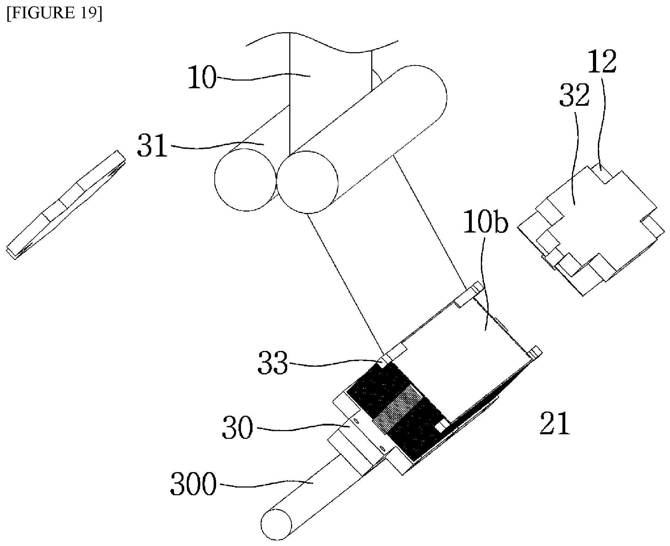

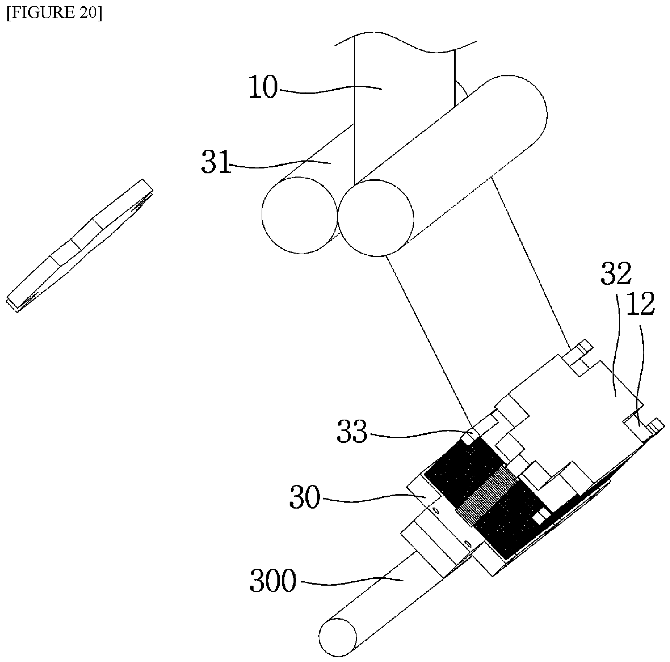

FIGS. 15 to 20 sequentially illustrate folding of a separator and a stacking process of an electrode repeated until an electrode laminate is complete. Referring to FIG. 15 to 20, the stacking step S1 may include a step S13 of repeatedly folding the separator 10 to alternately form the first folded portion 101 and the second folded portion 102 after the third folded portion 103 is formed while alternately stacking the first electrode 11 and the second electrode 12.

The first electrode 11 and the second electrode 12 are transported by the transport device 32 and are stacked on the first side 10a and the second side 10b of the separator 10 which are folded in a zigzag manner, respectively. Here, the stack table 30 moves back and forth in widthwise direction relative to the nip roll 31 and the separator 10 is folded in a zigzag manner. Specifically, the stack table 30 may be driven to reciprocate in widthwise direction with respect to a predetermined center axis 300 arranged vertically under the nip roll 31. Here, a mandrel 33 moving together with the stack table 30 may grip and ungrip the separator 10 and regulate the formation positions of the first folded portion 101 and the second folded portion 102. The above-described process is repeated to stack sufficient number of electrodes 11 and 12, and the second electrode 12 is stacked on the uppermost layer to complete the electrode laminate 1S, thereby ending the stacking step S1.

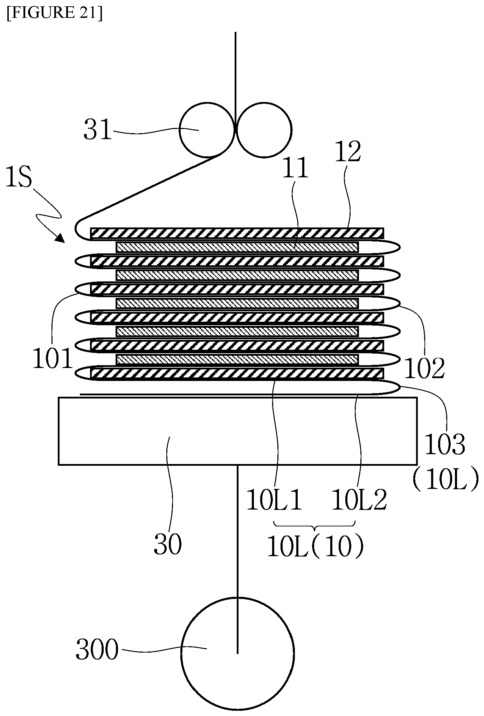

FIG. 21 illustrates the electrode laminate formed after the stacking step is completed. Referring to FIG. 21, immediately after the electrode laminate 1S is completed, the uppermost layer of the stacked electrodes 11 and 12 is constituted by the second electrode 12. Here, the separator 10 surrounds the first widthwise end of the second electrode 12. In this state, the pulling step S2 is performed.

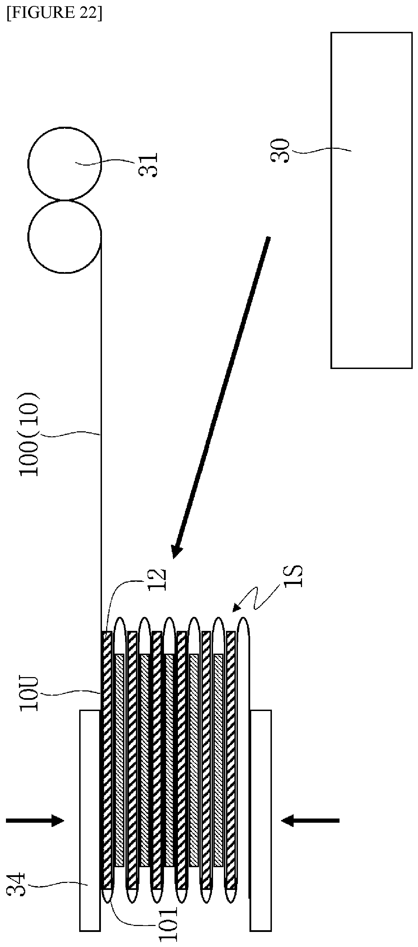

FIG. 22 illustrates the electrode laminate gripped by the gripper and pulled. Referring to FIG. 22, in the pulling step S2, the completed electrode laminate 1S is vertically gripped by the gripper 34, and the first widthwise end of the separator 10 is pulled by the nip roll 31. Accordingly, the separator 10 is further unfolded toward the second widthwise end side, forming the developed portion 100. In addition, Here, the separator 10 forms the top cover 10U covering the uppermost layer of the stacked electrodes 11 and 12 and connected to the first folded portion 101.

From the pulling step S2 to the temporarily attaching step S5, the electrode laminate 1S may be gripped vertically by a gripper 34. Accordingly, the upper surface and lower surface of the electrode laminate 1S may be in contact with the gripper 34.

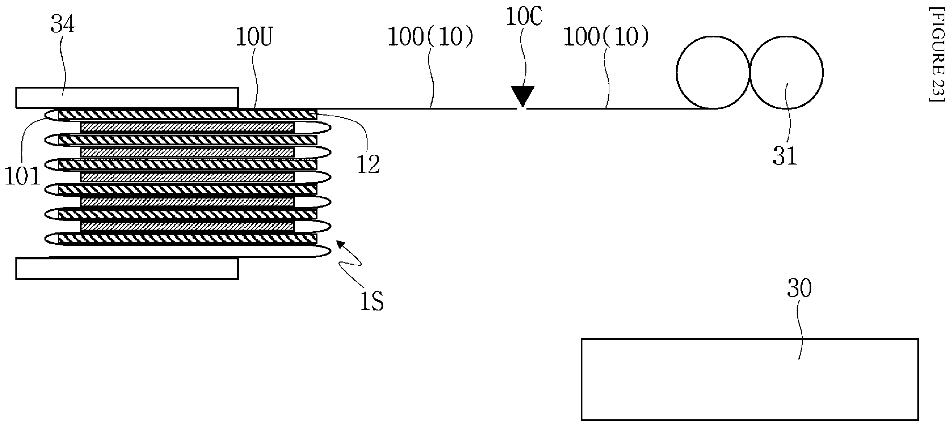

FIG. 23 illustrates a developed portion of the separator being cut. Referring to FIG. 23, the separator 10 is cut at a predetermined cutting portion 10C located on the developed portion 100. Here, the end portion of the separator 10 directs to the second widthwise end side viewed from the electrode laminate 1S and to the first widthwise end side viewed from the nip roll 31. Hereafter, the electrode laminate 1S is subjected to the side covering step S4, the temporarily attaching step S5, and the thermal compression bonding step S6, and the separator 10 remaining on the nip roll 31 is fixed to the stack table 30 as in FIGS. 12 and 13 in order to perform a new stacking step S1.

Referring to FIGS. 12 to 14, and FIGS. 22 and 23 together, since the top cover 10U extends from the first folded portion 101, in the pulling step S2, the electrode laminate 1S is pulled toward the first widthwise end side. Accordingly, in the cutting step S3, the cutting portion 10C is formed toward the second widthwise end side. In such case, when the end portion of the separator 10 is fixed on the stack table 30 to start a new stacking step S1, the end portion of the separator 10 is fixed to face the first widthwise end side. When the third folded portion 103 is not formed in the stacking step S1, the forming directions of the first folded portion 101 and the second folded portion 102 in the new stacking step S1 are opposite to those in the previous electrode laminate 1S, which causes great inconvenience in the process. That is, by folding the separator 10 once in advance before starting the stacking of the electrodes 11 and 12 to form the third folded portion 103, the forming direction of the first folded portion 101 and the second folded portion 102 may be maintained constant in each repeated stacking step S1.

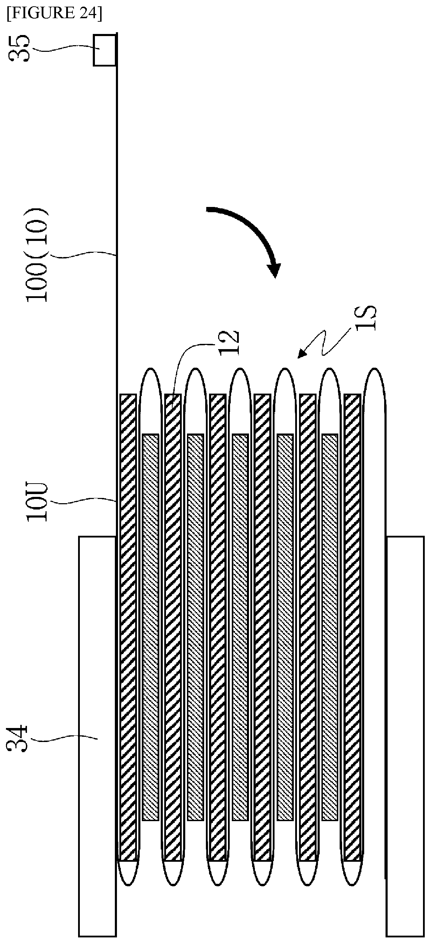

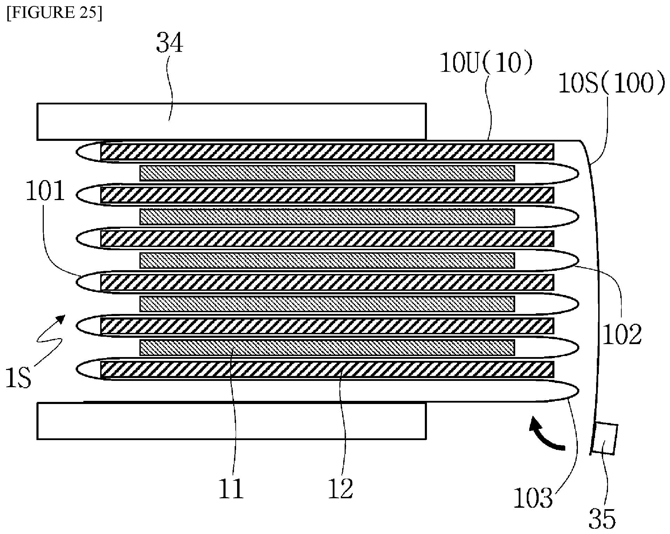

FIGS. 24 and 25 illustrate a process of cutting portion of a separator forming a side cover. Referring to FIGS. 24 and 25, the cutting portion 10C may be moved relative to the electrode laminate 1S such that the developed portion 100 covers the side surface of the electrode laminate 1S. Here, the cutting portion 10C may be moved while being pulled by the tack welding device 35 that grips the cutting portion 10C from the time the cutting step S3 is performed. After the developed portion 100 covers the side surface of the electrode laminate 1S, the cutting portion 10C may be temporarily attached by being bonded or fused to another part of the separator 10.

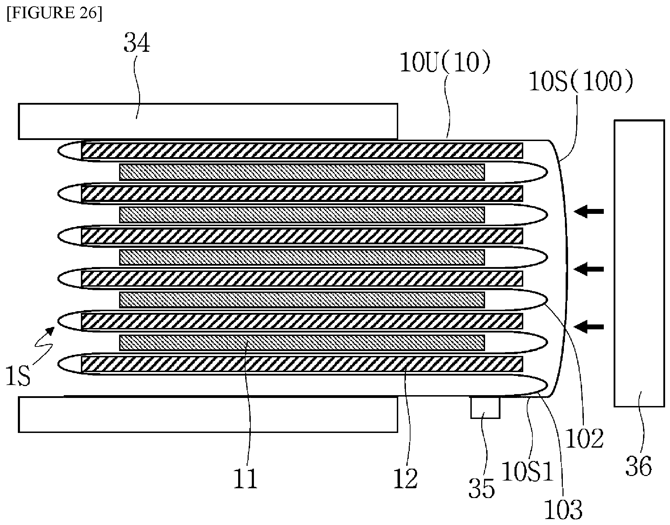

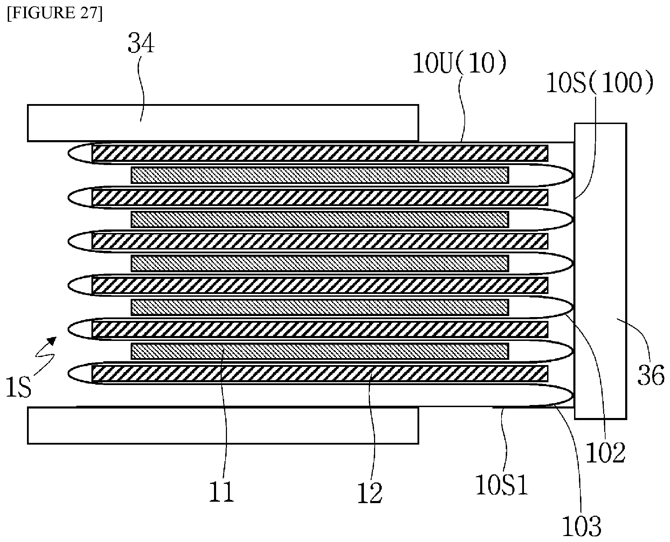

FIGS. 26 and 27 illustrate a process of the side cover being temporarily attached to an electrode laminate. Referring to FIGS. 26 and 27, the temporarily attaching step S5 may include a step S51 of forming an attachment 10S1 by bonding or fusing the cutting portion 10C to the lower surface of the bottom cover 10L. Accordingly, a short-circuit prevention structure of the second electrode 12 may be formed by bringing the side cover 10S into contact with the side surface of the electrode laminate 1S, and the separator 10 may be firmly fixed. Here, it is preferable that an appropriate tension is applied to the side cover 10S such that the side cover 10S is brought into contact with the second folded portion 102 and at the same time, the side surface of the electrode assembly 1 may be smoothly finished.

Specifically, in the temporarily attaching step S5, the attachment 10S1 may be formed between a second widthwise end and a widthwise center of the lower surface of the bottom cover 10L in the temporarily attaching step S5. Accordingly, the attachment 10S1 may be formed on the lower surface of the bottom cover 10L even when the gripper is gripping the electrode laminate 1S.

According to an embodiment of the present invention, the attachment 10S1 may be fused to a portion of the lower surface of the bottom cover 10L. Specifically, the attachment 10S1 may be formed by a tack welding device 35 gripping the cutting portion 10C, pulling the developed portion 100 to surround the side surface of the electrode laminate 1S, and then fusing to attach the cutting portion 10C to the lower surface of the bottom cover 10L.

The temporarily attaching step S5 may include a step S52 of bonding or fusing the side cover 10S to the entirety of or a portion of the second folded portion 102 and/or the third folded portion 103. Accordingly, the side cover 10S may completely cover the second widthwise end of the second electrode 12 to prevent short circuit, and smoothly finish the side surface of the electrode assembly 1 to improve the insertability into the pouch.

According to an embodiment of the present invention, the side cover 10S may be fused with the second folded portion 102 and/or the third folded portion 103 by a side sealing device 36 that heats and presses the side cover 10S from the side surface. Here, the side cover 10S may be thermally contracted and pulled tightly as heated, and the side surface of the electrode assembly 1 may be finished more smoothly.

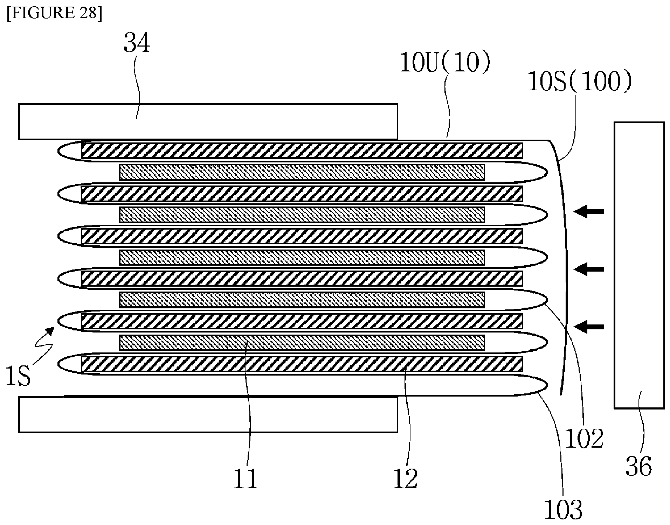

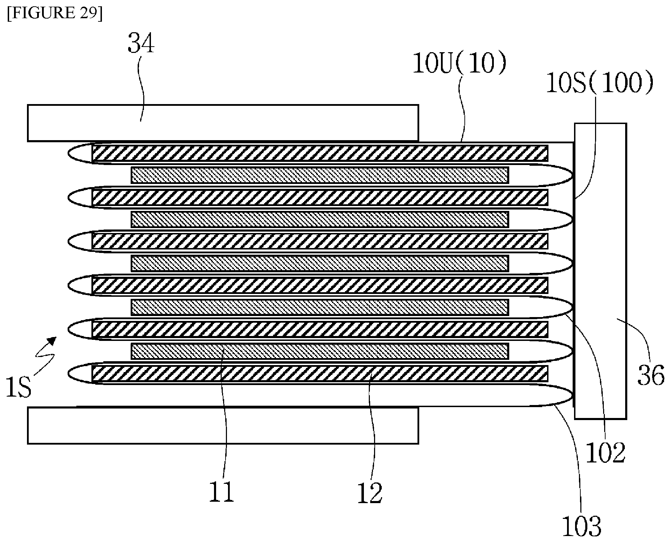

FIGS. 28 and 29 illustrate a temporarily attaching step according to a modified example. Referring to FIGS. 28 and 29, the electrode assembly 1 according to a modified example may be without the attachment 10S1. Here, the developed portion 100 may be fixed by bonding or fusing to the entirety of or a portion of the second folded portion 102 and/or the third folded portion 103. Specifically, the side cover 10S may be fused to the second folded portion 102 and/or the third folded portion 103 by a side sealing device 36 that heats and presses the side cover 10S from the side surface. Here, the side cover 10S shrinks to be pulled tight as heated, and the side surface of the electrode assembly 1 may be finished more smoothly.

According to the modified example, even when the attachment 10S1 is not formed, the side cover 10S may be more firmly fused to the entirety of the side surface of the electrode laminate 1S as the third folded portion 103 is formed in the separator 10. This is because the third folded portion 103 may come into contact with the side cover 10S over a large area as in FIG. 9. In addition, the second widthwise end of the second electrode 12, which constitutes the lowermost layer among the electrodes 11 and 12, may also be completely covered.

According to an embodiment of the present invention, the electrode assembly 1 may be completed by thermally compressing the separator 10 to the electrode laminate 1S with the separator 10 temporarily attached to the electrode laminate 1S.

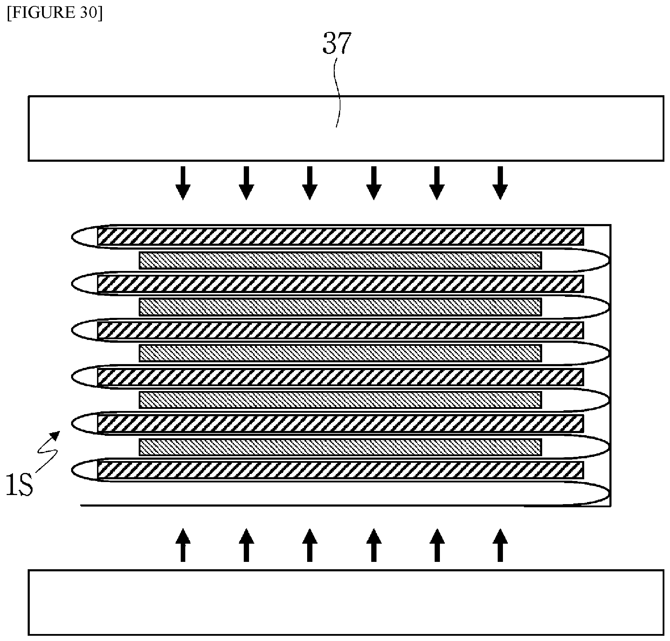

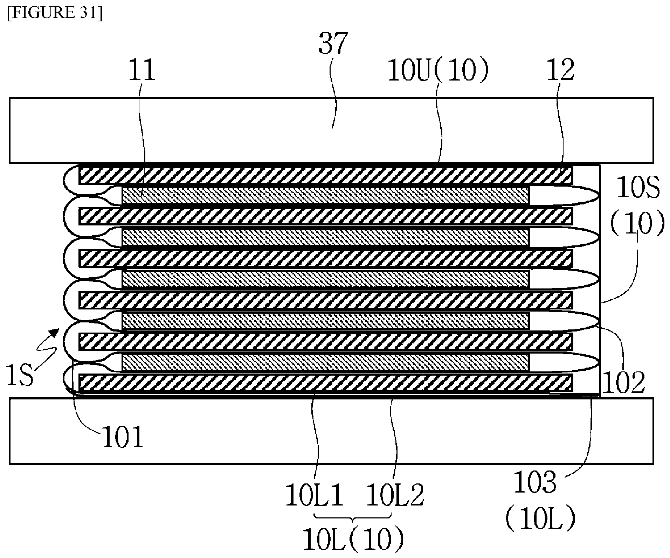

FIGS. 30 and 31 illustrate a process of an electrode laminate being subjected to a thermo compression bonding. Referring to FIGS. 30 and 31, in the thermal compression bonding step S6, the adjacent surfaces of the separators 10 may be bonded or fused. Here, the surface of the separator 10 may be coated with an adhesive or fusible binder. In addition, the first electrode 11 and the second electrode 12 may also be coated with an adhesive or fusible binder, and the surface of the separator 10 and the surface of the electrodes 11 and 12 may be bonded or fused with each other. Accordingly, the separator 10 and the electrodes 11 and 12 may be firmly fixed, thereby reinforcing the structural stability of the electrode assembly 1 and preventing a short circuit.

According to an embodiment of the present invention, in the thermal compression bonding step S6, the first folded portions 101 may be vertically bonded or fused to each other. Accordingly, the first widthwise end of the first electrode 11 is covered by the separator 10 such that a short circuit may be prevented.

Here, it is preferable that the adhesion between the second electrode 12 and the separator 10 is formed weaker than the adhesion between the separators 10. When the adhesion between the separator 10 and the second electrode 12 is stronger than the adhesion between the separators 10, the adhesion between the first folded portions 101 may be released during the process of the electrode assembly 1 being elastically restored after thermal compression.

According to an embodiment of the present invention, provided is a structure of an electrode assembly 1 wherein the two widthwise ends of the first electrode 11 and the second electrode 12 are both blocked from or sufficiently separated from the outside by the separator 10 such that the risk of a short circuit is significantly reduced.

In addition, according to the second embodiment, the separator 10 makes the side surface of the electrode assembly 1 smooth and firm such that the structure of the electrode assembly 1 with high structural stability and excellent insertability into the pouch 20 is provided.

In addition, according to the second embodiment, provided is a structure of the electrode assembly 1 wherein the numbers of folded portions 101, 102 and 103 provided at the two widthwise ends of the electrode assembly 1 are the same such that the horizontal balance is excellent, the twisting of tabs or leads is prevented, the pressing force is evenly distributed during thermal compression, and insertability into the pouch 20 is excellent.

In addition, according to the second embodiment, by forming the third folded portion 103 to form the bottom cover 10L as a double layer, the side cover 10S may be more firmly fixed to the side surface of the electrode laminate 1S, and provided is a battery manufacturing method in which the successive stacking step S1 is performed more easily and naturally.

In addition, according to the second embodiment, provided is a structure of an electrode assembly wherein large weight and high capacity are allowed without excessively using a separator, and a decrease in the insertability into a pouch or a decrease in the energy density due to the swell phenomenon of the separator is prevented.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An electrode assembly comprising:
an electrode comprising a first electrode and a second electrode alternately and repeatedly stacked in vertical direction; and
a separator stacked together with the first electrode and the second electrode,
wherein the second electrode is wider than the first electrode,
an uppermost layer and a lowermost layer of the electrode are constituted by the second electrode,
the separator comprises: a first folded portion folded to surround a first widthwise end of the second electrode; a second folded portion folded to surround a second widthwise end of the first electrode; a stacked portion connecting the first folded portion and the second folded portion and stacked together with the first electrode and the second electrode; a top cover connected to the first folded portion and stacked on the uppermost layer of the electrode; a bottom cover connected to the first folded portion and stacked under the lowermost layer of the electrode; and a side cover extending downward from a second widthwise end of the top cover and fixed to cover a second widthwise end of the second electrode, and
the bottom cover comprises: an upper layer connected to the first folded portion; a lower layer stacked under the upper layer; and a third folded portion connecting second widthwise ends of the upper layer and the lower layer.

2. The electrode assembly of claim 1, wherein the side cover is bonded or fused to at least a portion of the second folded portion.

3. The electrode assembly of claim 2, wherein the side cover is bonded or fused to an entirety of the second folded portion.

4. The electrode assembly of claim 1, wherein the side cover is bonded or fused to the third folded portion.

5. The electrode assembly of claim 1, wherein the separator further comprises an attachment extending from a lower end of the side cover and attached to another portion of the separator.

6. The electrode assembly of claim 5, wherein the attachment is bonded or fused to a lower surface of the bottom cover.

7. The electrode assembly of claim 1, wherein a gap between the first widthwise end of the first electrode and a first widthwise end of the first folded portion is larger than a gap between the second widthwise end of the second electrode and a second widthwise end of the second folded portion.

8. The electrode assembly of claim 7, wherein the gap between the first widthwise end of the first electrode and the first widthwise end of the first folded portion is at least 1.5 times the gap between the second widthwise end of the second electrode and the second widthwise end of the second folded portion.

9. The electrode assembly of claim 8, wherein the gap between the first widthwise end of the first electrode and the first widthwise end of the first folded portion is at least twice the gap between the second widthwise end of the second electrode and the second widthwise end of the second folded portion.

10. The electrode assembly of claim 1, wherein the gap between the first widthwise end of the first electrode and the first widthwise end of the first folded portion is equal to or larger than 2 mm.

11. A battery manufacturing method of manufacturing an electrode assembly of claim 1, the battery manufacturing method comprising, in order:
a stacking step of stacking an electrode between a separator having two alternately folded widthwise ends on a stack table to form an electrode laminate;
a pulling step of further unfolding the separator away from a second widthwise end to form a developed portion with the electrode laminate gripped after the separator is stacked on an uppermost layer of the electrode;
a cutting step of cutting the developed portion at a predetermined cutting portion;
a side covering step of forming a side cover where the developed portion covers a side surface of the electrode laminate by gripping and then relatively moving the cutting portion with respect to the electrode laminate; and
a temporarily attaching step of attaching and fixing the developed portion to another portion of the separator,
wherein the stacking step comprises, in order:
a step of fixing an end portion of the separator continuously supplied from a separator roll to the stack table so as to face a first widthwise end side;
a step of folding the separator at a second widthwise end to form a third folded portion; and
a step of alternately stacking a first electrode and a second electrode while repeatedly folding the separator to alternately form a first folded portion and a second folded portion.

12. The battery manufacturing method of claim 11, further comprising a thermal compression bonding step of thermally compressing to vertically bond the electrode laminate.

13. The battery manufacturing method of claim 11, wherein the temporarily attaching step comprises a step of attaching the cutting portion to a lower surface of a bottom cover to form an attachment.

14. The battery manufacturing method of claim 13, wherein the attachment is formed between a second widthwise end and a widthwise center of the lower surface of the bottom cover in the temporarily attaching step.

15. The battery manufacturing method of claim 11, wherein the temporarily attaching step comprises a step of bonding or fusing the side cover to the second folded portion.

16. The battery manufacturing method of claim 11, wherein the temporarily attaching step comprises a step of bonding or fusing the developed portion to the third folded portion.

17. The battery manufacturing method of claim 12, wherein the first folded portion is vertically fused to each other in the thermal compression bonding step.
